# EUROPEAN PATENT APPLICATION

(11) **EP 4 653 551 A1**
(43) Date of publication of application: **26.11.2025**
(21) Application number: 23922444.7
(22) Date of filing: 30.11.2023
(51) Int. Cl.: C21B 3/04, C22B 26/20

(54) **COMPREHENSIVE UTILIZATION METHOD FOR STEELMAKING SLAG**

(30) Priority: 13.02.2023 CN 202310104636
(71) Applicant: Yuanchu Technology (Beijing) Co., Ltd, Beijing 100015 (CN)
(72) Inventor: YU, Changjun, Beijing 100015 (CN)
(74) Representative: Bayramoglu et al.
(86) International application number: PCT/CN2023/135502
(87) International publication number: WO 2024/169328

(57) **Abstract**

A comprehensive utilization method for steelmaking slag, comprising the following steps: leaching free calcium oxide in steelmaking slag by using a first ammonium chloride solution, carrying out solid-liquid separation to obtain a first leaching residue and a first mineralization solution, and subjecting the first mineralization solution to CO₂ absorption mineralization of to obtain calcium carbonate and an ammonium chloride solution; leaching the first leaching residues by using a second ammonium chloride solution, carrying out solid-liquid separation to obtain a second leaching residue and a coarse mineralization liquid, subjecting the coarse mineralization liquid to oxidation, alkalinization, and solid-liquid separation to obtain an iron-aluminum precipitate residue and a second mineralization liquid, and subjecting the second mineralization liquid to CO₂ absorption mineralization to obtain crude calcium carbonate and an ammonium chloride solution; and leaching the iron-aluminum precipitate residue by using a sodium hydroxide solution to separate the elements iron and aluminum. The method can achieve the efficient extraction and separation of main elements in steelmaking slag while achieving carbon reduction, and the auxiliary agent can be recycled. The process is simple, and the production cost is low, facilitating industrial production.

## Description

### CROSS-REFERENCE TO RELATED APPLICATIONS

This application claims priority of the Chinese patent application No. 202310104636.X filed on February 13, 2023, entitled "A comprehensive utilization method for steelmaking slag", which is hereby incorporated by referring to all the description, claims, drawings and abstract of the above Chinese invention application.

### TECHNICAL FIELD

The present disclosure relates to the technical field of comprehensive utilization of industrial waste slag, and in particular to a method for comprehensive utilization of steelmaking slag.

### BACKGROUND

Steelmaking slag is the slag discharged in the process of steelmaking, which contains oxides formed by oxidation of various elements in metal charge, impurities in metal charge, and calcined products of tunable substances such as limestone. The steelmaking slag contains about 20% of residual iron, along with calcium/magnesium/aluminum oxides and silicates, and other substances. Iron in the steelmaking slag may be partially recycled by magnetic separation and other methods, while the remaining calcium/magnesium/aluminum oxides and silicates and other substances may be used in cement and road paving. However, a large amount of the waste slag is still disposed by stockpiling.

The discharge of a large amount of the steelmaking slag will cause serious environmental pollution and harm. First of all, the stockpiling of the steelmaking slag will occupy a lot of valuable land resources. Further, since some steelmaking slag particles are fine, it is easy to form a dust phenomenon, which causes a dust pollution and is harmful to human health. In addition, after being eluviated by rainwater, the steelmaking slag will also mix with water and flow into nearby land or rivers, causing serious environmental pollution. Therefore, how to reduce the pollution caused by the steelmaking slag, transform the waste slag into valuable resources, and promote its efficient recycling and comprehensive utilization has become an urgent technical problem to be solved at present.

Extraction-utilization according to elements is an important way to recycle solid waste. Alkaline substances and silicates contained in the steelmaking slag, such as calcium oxide, magnesium oxide, calcium silicate and magnesium silicate, may be used as solidification raw materials of CO₂ for mineralization and fixation of CO₂. Meanwhile, iron and aluminum contained in the steelmaking slag, after being leached and enriched as alkaline oxides, may be further used as flocculant, catalyst carrier and other raw materials, thus realizing advanced resource utilization of steelmaking slag.

Currently, documents and patents disclose various methods for extracting calcium, magnesium, aluminum, iron and other elements from the steelmaking slag and comprehensive utilization thereof. For example, CN202010726836.5 discloses a method for comprehensive utilization of steelmaking slag, which comprises the following steps: leaching the steelmaking slag through ammonium chloride to obtain a leaching solution of CaCl₂-NH₄Cl-NH₃-H₂O system and a filter residue, fixedly sealing carbon dioxide gas generated by smelting in situ by using the leaching solution to prepare a high-purity calcium carbonate product, then reducing the filter residue at a high temperature to extract iron, and directly preparing diopside phase microcrystalline glass from molten waste residue. Although this method solves the problems of low utilization rate of steelmaking slag and complex process, the extraction rate of calcium in the leaching stage is very low, the reaction time is long, and a high-temperature melting state of 1300 to 1500°C is required in the process of extracting iron and preparing microcrystalline glass, the energy consumption is high, the operation is difficult, the degree of automation is low, and it cannot meet industrial-scale production demands.

CN20221042334.3 discloses a resource comprehensive utilization method for steelmaking slag, which extracts and utilizes silicon, iron, calcium, titanium, vanadium, aluminum, magnesium, and phosphorus contained in the steelmaking slag, respectively. The method comprises the following steps: leaching the steelmaking slag mainly by adding hydrochloric acid with a concentration of 30-36% for acid leaching; drying and grinding the filter residue after filtration to obtain silicon powder; adjusting the pH of filtrate with ammonia water and filtering to obtain a precipitate of iron hydroxide and filtrate B; reacting the filtrate B with sulfate and filtering to obtain calcium sulfate and filtrate C; adjusting the pH of the filtrate C by adding hydrochloric acid, and then being adsorbed and desorbed by titanium ion exchange resin to obtain filtrate E and titanium-bearing eluate; adjusting the filtrate E by ammonia water, and being adsorbed and desorbed by vanadium ion exchange resin to obtain filtrate H and vanadium-bearing eluate; adjusting the pH of the filtrate H by ammonia water to obtain aluminum hydroxide and filtrate J; adjusting the pH of the filtrate J by adding ammonia water, adding ammonium salt at the same time, and filtering to obtain magnesium ammonium phosphate and filtrate K; and evaporating and concentrating the filtrate K to obtain ammonium salt and distilled water for reuse. This method realizes the multi-element comprehensive utilization of steelmaking slag to a great extent. However, it consumes a lot of concentrated hydrochloric acid (30-36%) and ammonia water during the process, and there are problems such as coprecipitation during element separation, which leads to low purity of products. For example, aluminum ions are partially precipitated during adjusting pH to 3-4 with ammonia water, thereby resulting in low purity of iron products.

Aiming at the problems that the existing steelmaking slag recycling technology needs to consume a lot of acid and alkali, the calcium extraction rate is low, the purity is low, the comprehensive utilization rate of elements is low, and the energy consumption and material consumption are high, the present disclosure provides a novel method for comprehensive utilization of steelmaking slag.

### SUMMARY

The present disclosure aims to provide a method for comprehensive utilization of steelmaking slag, which significantly improves the comprehensive utilization rate of elements and reduces the production energy consumption and material consumption.

The present disclosure provides a method for comprehensive utilization of steelmaking slag, which comprises following steps:
S1, leaching free calcium oxide from the steelmaking slag using a first ammonium chloride solution, followed by a solid-liquid separation to obtain a first leaching residue and a first mineralized solution, and performing CO₂ absorption and mineralization on the first mineralized solution to obtain calcium carbonate and an ammonium chloride solution;
S2, leaching the first leaching residue using a second ammonium chloride solution, followed by a solid-liquid separation to obtain a second leaching residue and a mineralized crude solution, subjecting the mineralized crude solution to an oxidation, an alkali adjustment and a solid-liquid separation to obtain an iron-aluminum precipitate residue and a second mineralized solution, and performing CO₂ absorption and mineralization on the second mineralized solution to obtain a crude calcium carbonate and an ammonium chloride solution;
S3, leaching the iron-aluminum precipitate residue using a sodium hydroxide solution, followed by a solid-liquid separation to obtain an iron hydroxide precipitate and a sodium metaaluminate solution, performing CO₂ absorption and mineralization on the sodium metaaluminate solution to obtain an aluminum hydroxide precipitate and a sodium carbonate solution, and treating the sodium carbonate solution with carbide slag to obtain a crude calcium carbonate and a sodium hydroxide solution.

In the method for comprehensive utilization of steelmaking slag, firstly, a first ammonium chloride solution is employed to leach free calcium oxide from the steelmaking slag, and then CO₂ absorption and mineralization is carried out to obtain a calcium carbonate product. The chemical reaction involved is as follows:

CaO+2NH₄Cl→CaCl₂+ 2NH₃+H₂O

The slurry obtained from the above reaction is subjected to a solid-liquid separation to obtain a first leaching residue and a first mineralized solution. Gas containing CO₂ is introduced into the first mineralized solution for mineralization reaction to generate a calcium carbonate precipitate and ammonium chloride. After solid-liquid separation, calcium carbonate and an ammonium chloride solution are obtained. Calcium carbonate product may be obtained after washing and drying calcium carbonate. And, the obtained ammonium chloride solution may be returned to the leaching stage for reuse.

Then, the insoluble calcium, magnesium, iron and aluminum in the first leaching residue are further leached out, and CO₂ absorption and mineralization are carried out to obtain a crude calcium carbonate product and an iron-aluminum precipitate. The chemical reactions involved are as follows:

CaXₙOₘ(MgXₙOₘ)+2NH₄Cl →CaCl₂(MgCl₂)+XₙOₘ₋₁+ 2NH₃+H₂O

Al₂O₃+6NH₄Cl=2AlCl₃+3H₂O + 6NH₃

FeO+2NH₄Cl=FeCl₂+H₂O + 2NH₃

AlCl₃+3NH₃+3H₂O=Al(OH)₃+3NH₄Cl

FeCl₃+3NH₃+2H₂O=Fe(OH)₃+3NH₄Cl

CaCl₂ (MgCl₂)+CO₂+2NH₃·H₂O→ CaCO₃(MgCO₃) + 2NH₄Cl

The first leaching residue is added into the second ammonium chloride solution to leach out insoluble elements such as calcium, magnesium, aluminum and iron and generate ammonia gas. A solid-liquid separation is performed on the slurry obtained from the above reaction to obtain a second leaching residue and a mineralized crude solution. The mineralized crude solution contains CaCl₂ (MgCl₂), AlCl₃ and FeCl₂. Ferrous ions in the slurry are completely oxidized into trivalent iron ions through oxidation reaction and then the pH value of the slurry is adjusted to precipitate iron and aluminum elements in the form of hydroxide precipitate and ammonium chloride is generated. After performing a solid-liquid separation on the above slurry, iron and aluminum precipitate residues and a second mineralized solution containing calcium and magnesium elements can be obtained. The second mineralized solution is subjected to CO₂ absorption and mineralization to generate a carbonate precipitate and ammonium chloride. After performing a solid-liquid separation, carbonate and an ammonium chloride solution are obtained. After washing and drying the carbonate, a crude calcium carbonate product can be obtained. The obtained ammonium chloride solution can be returned again to the leaching stage for reuse.

Finally, iron and aluminum elements are separated from the iron-aluminum precipitate residue and CO₂ absorption and mineralization are carried out, to obtain a crude calcium carbonate product and iron and aluminum products. The chemical reactions involved are as follows:

Al(OH)₃+NaOH=NaAlO₂+2H₂O

2NaAlO₂+3H₂O+CO₂=2Al(OH)₃↓+Na₂CO₃

Na₂CO₃+Ca(OH)₂=2NaOH+CaCO₃↓

The iron-aluminum precipitate residue is added into a sodium hydroxide solution with a certain concentration for leaching. The aluminum hydroxide precipitate is dissolved into water-soluble sodium metaaluminate under certain conditions. An iron hydroxide precipitate and a sodium metaaluminate solution are obtained after performing a solid-liquid separation on the slurry of the above reaction. An aluminum hydroxide precipitate and a sodium carbonate solution are obtained after the sodium metaaluminate is subjected to a mineralization reaction. The sodium carbonate solution is treated with carbide slag (the primary component is calcium hydroxide) to obtain a sodium hydroxide solution and a calcium carbonate precipitate. After performing a solid-liquid separation, calcium carbonate and a sodium hydroxide solution are obtained. After washing and drying the calcium carbonate, a crude calcium carbonate product can be obtained, and the obtained sodium hydroxide solution can be returned to the leaching stage for reuse.

Therefore, the method for comprehensive utilization of steelmaking slag of this disclosure fully combines the properties of steelmaking slag, realizes the extraction and separation of primary elements in the steelmaking slag, and simultaneously achieves the purpose of reducing carbon.

The method of solid-liquid separation in the present disclosure is not strictly limited, including but not limited to sedimentation separation, filtration, centrifugation, etc.

In addition, CO₂ used in the mineralization reaction in the present disclosure is preferably an industrial waste gas, and the volume content of CO₂ in the industrial waste gas is 5%-100%.

As a preferable technical solution, the leaching in step S1 is only for extracting free calcium oxide from the steelmaking slag. In order to avoid other elements such as iron and aluminum in the steelmaking slag from entering the solution, a mass concentration of the first ammonium chloride solution used is 5-30%, and preferably 8-25%. Further, during the leaching, a temperature of the reaction system is controlled to be 5-55°C, and preferably 10-40°C, and pH needs to be controlled to be greater than 9.

As a preferable technical solution, the leaching in step S2 is to extract insoluble calcium, magnesium, iron and aluminum from the steelmaking slag. Therefore, in order to promote the dissolution of insoluble components in the steelmaking slag, a mass concentration of the second ammonium chloride solution used is 10-40%, and preferably 10-35%, and during the leaching, a temperature of the reaction system is controlled to be 90-125°C, and preferably 100-120°C, and pH is controlled to be less than 2.5.

As a preferable technical solution, in step S2, in order to ensure that insoluble components in the first leaching residue are dissolved and extracted by ammonium chloride as much as possible, a molar ratio of ammonium chloride in the second ammonium chloride solution to soluble components in the first leaching residue is (2-6):1. The soluble components are calculated by calcium silicate, magnesium silicate, aluminum oxide and iron oxide. The molar ratio of calcium silicate and magnesium silicate to ammonium chloride is 1:2. The molar ratio of aluminum oxide to ammonium chloride is 1:6. The molar ratio of iron oxide to ammonium chloride is 1:2. Considering the content of insoluble components in the first leaching residue, the molar ratio of ammonium chloride to soluble components in the first leaching residue is preferably (3-5):1.

As a preferable technical solution, in step S2, when the first leaching residue is leached using the second ammonium chloride solution, ammonia gas generated by a reaction is discharged from the reaction system, and the discharging method comprises any one of inert gas stripping, evaporation and ultrasound. During the leaching, ammonia gas continuously escapes from the liquid phase by the above method, which not only can promote the reaction to the dissolution direction, but also the obtained ammonia-containing gas can be used for subsequent alkali adjustment and mineralization reaction.

As a preferable technical solution, in step S2, during the oxidation, air or an oxidant is introduced into the mineralized crude solution to completely oxidize ferrous ions into ferric ions;
during the alkali adjustment, ammonia gas collected during the leaching is introduced into the mineralized crude solution that has been oxidized, to adjust pH to 5-6 to precipitate iron and aluminum elements in the form of hydroxide precipitate and generate ammonium chloride;
during the CO₂ absorption and mineralization, CO₂ gas and ammonia gas collected during the leaching are introduced into the second mineralized solution.

When the second mineralized solution containing calcium and magnesium is mineralized, CO₂ gas is introduced into the second mineralized solution and meanwhile ammonia collected during the leaching is introduced, so that a carbonate precipitate and an ammonium chloride solution can be obtained. In this way, it not only reduces the consumption of ammonia in this process, but also improves the comprehensive utilization rate of ammonia.

As a preferable technical solution, in step S3, the iron hydroxide precipitate and the aluminum hydroxide precipitate are respectively washed and calcined to obtain an iron oxide product and an aluminum oxide product.

As a preferable technical solution, in steps S1 and S2, the generated ammonium chloride solution returns to the leaching stage respectively to form a closed loop; in step S3, the generated sodium hydroxide solution returns to the leaching stage to form a closed loop.

As a preferable technical solution, a slurry reactor used in the leaching of the present disclosure includes but is not limited to a mechanical stirring kettle, a loop reactor, a bubble column and a three-phase fluidized bed reactor. The slurry reactor used in the present disclosure specifically comprises a jacketed reaction kettle, a stirring device and an aeration mechanism, wherein the top of the jacketed reaction kettle is provided with an air inlet, an air outlet and a feed inlet, and the bottom is provided with a discharge port and an outlet port, and both the stirring device and the aeration mechanism are arranged inside the jacketed reaction kettle; one or more baffle plates are arranged at the bottom of the inner side of the jacketed reaction kettle, so as to further improve the dispersion effect of the mixed slurry, reduce the generation of inert layers on the surface of particles, increase the probability that the extraction solution diffuses to the surface of particles, and improve the efficiency for element leaching.

As a preferable technical solution, the aeration mechanism comprises an aeration coil pipe and an aeration chassis, wherein the aeration coil pipe is spirally arranged on the inner side wall of the jacketed reaction kettle, the aeration chassis is fixedly arranged at the bottom of the inner side of the jacketed reaction kettle, and the aeration chassis is a concentric coil pipe, and the concentric coil pipe is uniformly provided with a plurality of aeration holes.

In addition, the aeration coil pipe on the inner side wall of the jacketed reaction kettle and the concentric coil pipe at the bottom of the inner side of the jacketed reaction vessel are arranged to further improve the disturbance to the mixed slurry, so as to increase the dispersion of the mixed slurry and improve the leaching rate of elements.

The outer side of the jacketed reaction vessel of the slurry reactor is provided with a circulating liquid inlet and a circulating liquid outlet, and the jacketed reaction vessel is connected with an electric heating device that can be used for heating the circulating liquid in the jacket.

The method for comprehensive utilization of steelmaking slag of the present disclosure has at least the following technical effects:
1. The present disclosure realizes the extraction and separation of primary elements such as calcium, magnesium, aluminum, iron and the like in the steelmaking slag by analyzing the properties of the raw materials of the steelmaking slag and controlling the process parameters, and obtains mineralized product of calcium carbonate and crude calcium carbonate through CO₂ absorption and mineralization. In addition, the separation of iron and aluminum elements is realized by introducing carbide slag and a recyclable additive of sodium hydroxide, and an iron oxide product and an aluminum oxide product both with high purity are obtained respectively. Meanwhile, the purpose of carbon emission reduction is further achieved by performing CO₂ absorption and mineralization.
2. In the method for comprehensive utilization of steelmaking slag of the present disclosure, the recyclable additive can be recycled without the help of extraction and separation via organic reagents, and without the help of high temperature decomposition and other operations. The process is simple and easy to scale up.
3. In the method for comprehensive utilization of steelmaking slag, ammonia is urged to escape from the solution in the form of gas phase, which not only improves the efficiency of leaching reaction, but also reduces the input amount of ammonia in the subsequent process, thus improving the comprehensive utilization rate of ammonia.
4. In the method for comprehensive utilization of steelmaking slag of the present disclosure, a self-designed slurry reactor is adopted to realize the leaching of insoluble elements such as calcium, magnesium, iron and aluminum in steelmaking slag. The leaching efficiency and comprehensive utilization rate of elements are improved. The method is simple to operate and easy for industrial production.

### BRIEF DESCRIPTION OF DRAWINGS

In order to illustrate the specific implementations of the present disclosure or the technical solution in the prior art more clearly, the drawings needed to be used in the description of the specific implementations or the prior art will be briefly introduced below. Obviously, the drawings in the following description are some implementations of the present disclosure. For those skilled in the art, other drawings can be obtained based on these drawings without creative work.
FIG. 1 is a schematic diagram of a slurry reactor of the present disclosure;
FIG. 2 is a schematic diagram of an aeration chassis of the present disclosure;
FIG. 3 is a process flowchart of step S1 of the present disclosure;
FIG. 4 is a process flowchart of step S2 of the present disclosure;
FIG. 5 is a process flowchart of step S3 of the present disclosure.

1: jacketed reaction kettle; 2: stirring device; 3: air inlet; 4: air outlet; 5: feed inlet; 6: discharge port; 7: outlet port; 8: deflection baffle; 9: aeration coil pipe; 10: aeration chassis.

### DESCRIPTION OF EMBODIMENTS

It should be indicated that the following detailed descriptions are all exemplary and are intended to provide further explanation for the present disclosure. Unless otherwise specified, all technical and scientific terms used herein have the same meaning as commonly understood by those skilled in the art to which the present disclosure belongs.

It should be noted that the terms used here is only for describing specific implementations, and is not intended to limit exemplary implementations according to the present disclosure. As used herein, the singular form also includes the plural form unless the context clearly indicates otherwise. Further, it should also be understood that when the terms "contain" and/or "comprise (include)" are used in this disclosure, they specify the presence of features, steps, operations, devices, components and/or combinations thereof.

The technical solution of the present disclosure will be described clearly and completely with reference to embodiments. Obviously, the described embodiments are a part of embodiments of the present disclosure, but not all the embodiments. Based on the embodiments in the present disclosure, all other embodiments obtained by those skilled in the art without creative work should fall within the protection scope of the present disclosure.

### Embodiment

Steelmaking slag was selected as the mineralized raw material of calcium silicate /magnesium silicate. The steelmaking slag was collected from a steel plant in Hebei Province, and its primary composition was determined by melting X-ray fluorescence spectrometry, as shown in Table 1.

Table 1 Primary element composition of steelmaking slag

**[Table 1_sm_001]**

| Compound | Alumina (Al₂O₃) | Silicon dioxide (SiO₂) | Iron oxide (Fe₂O₃) | Calcium oxide (CaO) | Magnesium oxide (MgO) | others |
|---|---|---|---|---|---|---|
| Content (wt%) | 1.11 | 11.1 | 35.43 | 38.11 | 8.23 | 6.02 |

According to YB/T 4328-2012 "Method for the determination of content of free calcium oxide in steelmaking slag", the mass fraction of free calcium oxide in steelmaking slag is 66%. An appropriate amount of steelmaking slag is ground to 100 meshes.

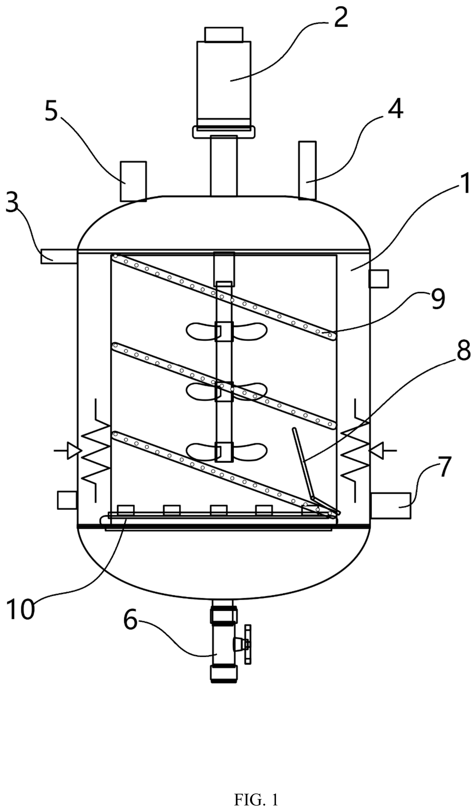

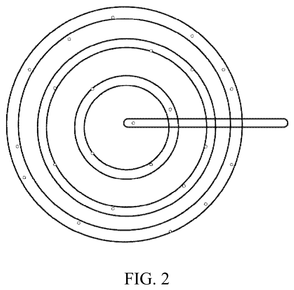

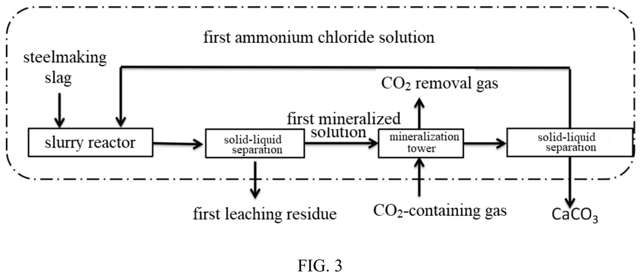

S1. A first ammonium chloride solution with a mass fraction of 10% was added into a slurry reactor (FIG. 1 and FIG. 2) according to the content of free calcium oxide. The temperature of the solution was controlled to be 25°C and the pH of the solution was controlled to be above 9. The solution was stirred at a low speed for 0.5 h and then a slurry was discharged. The slurry was settled and separated to obtain a first leaching residue rich in iron, aluminum and part of insoluble calcium, and a first mineralized solution containing calcium. The flue gas of a power plant with CO₂ content of 12% was introduced into the first mineralized solution containing calcium for mineralization reaction, to obtain a calcium carbonate precipitate and an ammonium chloride solution. The obtained calcium carbonate precipitate was subjected to a plate-and-frame pressure filtration for separation to obtain calcium carbonate and an ammonium chloride solution. The calcium carbonate was dried by a roller to obtain a micron calcium carbonate product, and the separated ammonium chloride solution was recycled for leaching steelmaking slag (FIG. 3).

Here, the extraction rate of free calcium was 98.5%, and the micron calcium carbonate product exhibited a purity of 99.96%, a whiteness of 98.4, and a particle size D50 of 2.5 µm.

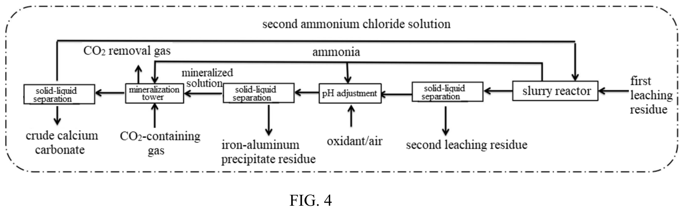

S2. The obtained second leaching residue rich in iron, aluminum and part of insoluble calcium was added into the slurry reactor (FIG. 1 and FIG. 2). A second ammonium chloride solution with a mass fraction of 20% was added in a reaction molar ratio of 2:1 according to the contents of calcium, magnesium, iron and aluminum in the first leaching residue. Circulating water was introduced into the jacket to control the reaction temperature of the solution to 90°C. Air was introduced into the jacket reaction kettle from an air inlet to control the pH of the solution to 2-2.5 and the ventilation rate is automatically adjusted by the pH of the solution. Ammonia-containing air is discharged from the air outlet and collected. After stirring and reacting for 1 h, the obtained slurry is subjected to a pressure filtration separation to obtain a second leaching residue and a mineralized crude solution containing calcium, magnesium, iron and aluminum. An appropriate amount of hydrogen peroxide was added into the mineralized crude solution while stirring, and the hydrogen peroxide was added in an amount of 1.1 stoichiometric ratio of the reaction relative to the iron ion content in the mineralized crude solution. After the reaction was finished, the collected ammonia-containing air was pressurized and then introduced into the mineralized crude solution. The pH of the crude solution was adjusted to 6, and iron and aluminum elements were precipitated in the form of hydroxide and ammonium chloride was generated. The obtained iron-aluminum precipitate was subjected to a pressure filtration separation to obtain an iron-aluminum precipitate residue and a second mineralized solution containing calcium and magnesium elements. The flue gas of a power plant with CO₂ content of 12% and the collected ammonia-containing air were introduced into the second mineralized solution for mineralization reaction, to obtain a carbonate precipitate and ammonium chloride. The obtained carbonate precipitate was subjected to a plate-and-frame pressure filtration to obtain a crude calcium carbonate and an ammonium chloride solution. The crude calcium carbonate was subjected to further washing and drum drying to obtain a micron crude calcium carbonate product. The obtained ammonium chloride solution was recycled back to the slurry reactor for reuse (FIG. 4).

Here, the micron crude calcium carbonate product contained 67.4% of calcium carbonate, 32.6% of magnesium carbonate, with a median diameter D50 of 2.2 µm, and a whiteness of 96.5. The total extraction rate of calcium was 99.86%, and the total extraction rate of magnesium was 96.2%.

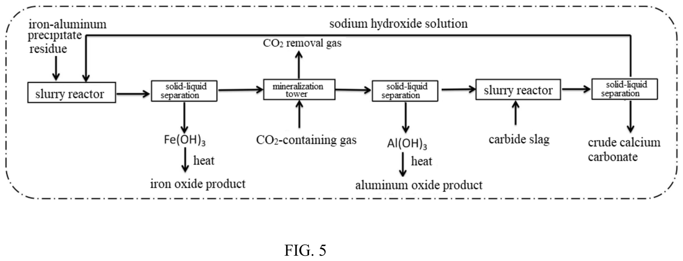

S3. In the slurry reactor (FIG. 1 and FIG. 2), the iron-aluminum precipitate residue obtained from the above separation was added into a 10% sodium hydroxide solution, and fully stirring and dissolving were performed. After filtration separation, an iron hydroxide precipitate and a sodium metaaluminate solution were obtained. The iron hydroxide precipitate was further washed and calcined to obtain an iron oxide product. The flue gas of a cement plant with a mass fraction of 30% was introduced into the sodium metaaluminate solution obtained by the above separation to react to generate aluminum hydroxide and sodium carbonate. After filtration separation, an aluminum hydroxide precipitate and a sodium carbonate solution were obtained. Aluminum hydroxide precipitate was further washed and calcined to obtain an aluminum oxide product. Carbide slag (with a content of calcium hydroxide of 94%) was added into the obtained sodium carbonate solution, with fully stirring and filtering to obtain a sodium hydroxide solution and a calcium carbonate precipitate. After a pressure filtration separation, a crude calcium carbonate product and a sodium hydroxide solution were obtained, and the sodium hydroxide solution was recycled to the slurry reactor for reuse (FIG. 5).

Here, the iron oxide product contained 99.8% of Fe₂O₃, 0.2% of total calcium (calculated by CaO). The extraction rate of iron was 97.6%.

The aluminum oxide product contained 99.9% of Al₂O₃, 0.1% of Fe₂O₃. The extraction rate of aluminum was 98.4%.

The crude calcium carbonate product contained 94.71% of calcium carbonate, 1.57% of magnesium carbonate, 0.15% of iron oxide, 3.58% of silicon dioxide, with a whiteness of 94.5 and a median diameter D50 of 4.9 µm.

### Embodiment

The raw material used in this embodiment is the same as the steelmaking slag used in Embodiment one, and the operation steps are substantially the same as those in Embodiment one, except the following differences in Step S2. Heat transfer oil was added into the jacket of the slurry reaction kettle and the heating device was turned on at the same time. The temperature of the reaction solution was controlled to be 105-115°C. No air was introduced. The generated ammonia was overflowed the solution by evaporation to maintain the pH of the solution between 2-2.5, and water was supplemented to maintain the liquid level stability. The water vapor containing ammonia was collected after condensation to prepare ammonia water, which was used for the process of iron and aluminum precipitation and the process of mineralization.

The micron crude calcium carbonate product obtained in step S2 contained 67.9% of calcium carbonate, 32.1% of magnesium carbonate, with a median diameter D50 of 2.1 µm, and a whiteness of 95.5. The total extraction rate of calcium was 99.94%, the total extraction rate of magnesium was 94.1%, the total extraction rate of iron was 98.2%, and the total extraction rate of aluminum was 98.7%.

### Comparative Example one

In step S1, the mass concentration of the first ammonium chloride solution was 10%, and the pH of the solution was 7-8. Other experimental steps were the same as those in Embodiment one.

In step S1, the extraction rate of free calcium was 97.4%. the micron calcium carbonate product had a purity of 91.4%, a whiteness of 86.3, and a particle size D50 of 3.3 µm.

### Comparative Example two

In step S2, the mass concentration of the second ammonium chloride solution was 20%, and the pH of the solution was 4-5. Other experimental steps were the same as those in Embodiment one.

In step S2, the micron crude calcium carbonate product contained 77.4% of calcium carbonate, 22.6% of magnesium carbonate, with a median diameter D50 of 2.5µm, and a whiteness of 97.3. The total extraction rate of calcium was 54.8%, and the total extraction rate of magnesium was 43.2%.

### Comparative Example three

The traditional jacketed slag reactor only with a stirring device was employed in the leaching process, and the treatment method and process parameters were the same as those in Embodiment one.

In step S1, the extraction rate of free calcium was 97.8%. The micron calcium carbonate product had a purity of 99.92%, a whiteness of 96.5, and a particle size D50 of 2.8 µm.

In step S2, the micron crude calcium carbonate product contained 60.1% of calcium carbonate, 39.9% of magnesium carbonate, with a median diameter D50 of 3.2µm, and a whiteness of 96.3. The total extraction rate of calcium was 60.6%, and the total extraction rate of magnesium was 51.3%.

In step S3, the iron oxide product contained 98.2% of Fe₂O₃, 1.8% of total calcium (calculated by CaO). The iron extraction rate was 20.6%.

The aluminum oxide product contained 98.9% of Al₂O₃, 1.1% of Fe₂O₃. The extraction rate of aluminum was 10.4%.

The crude calcium carbonate product contained 95.38% of calcium carbonate, 0.85% of magnesium carbonate, 0.13% of iron oxide, and 3.99% of silicon dioxide, with a whiteness of 95.7 and a median diameter D50 of 5.4 µm.

In summary, in the method for comprehensive utilization of steelmaking slag of the present disclosure, a self-designed slurry reactor is adopted, and the primary elements such as calcium, magnesium, aluminum and iron in the steelmaking slag are extracted and separated by analyzing the properties for the raw material of the steelmaking slag and controlling the process parameters. The leaching efficiency and comprehensive utilization rate of elements are significantly improved, and the purpose of carbon emission reduction is achieved simultaneously.

Finally, it should be explained that the above embodiments are only used to illustrate the technical solution of the present disclosure, but not to limit it. Although the present disclosure has been described in detail with reference to the above embodiments, it should be understood by those skilled in the art that the technical solutions described in the above embodiments may still be modified, or some or all of its technical features may be replaced by equivalents. However, these modifications or replacements do not make the essence of the corresponding technical solutions deviate from the scope of the technical solutions of various embodiments of the present disclosure.

## Claims

1. A method for comprehensive utilization of steelmaking slag, comprising following steps:
S1, leaching free calcium oxide from the steelmaking slag using a first ammonium chloride solution, followed by a solid-liquid separation to obtain a first leaching residue and a first mineralized solution, and performing CO₂ absorption and mineralization on the first mineralized solution to obtain calcium carbonate and an ammonium chloride solution;
S2, leaching the first leaching residue using a second ammonium chloride solution, followed by a solid-liquid separation to obtain a second leaching residue and a mineralized crude solution, subjecting the mineralized crude solution to an oxidation, an alkali adjustment and a solid-liquid separation to obtain an iron-aluminum precipitate residue and a second mineralized solution, and performing CO₂ absorption and mineralization on the second mineralized solution to obtain a crude calcium carbonate and an ammonium chloride solution;
S3, leaching the iron-aluminum precipitate residue using a sodium hydroxide solution, followed by a solid-liquid separation to obtain an iron hydroxide precipitate and a sodium metaaluminate solution, performing CO₂ absorption and mineralization on the sodium metaaluminate solution to obtain an aluminum hydroxide precipitate and a sodium carbonate solution, and treating the sodium carbonate solution with carbide slag to obtain a crude calcium carbonate and a sodium hydroxide solution.

2. The method for comprehensive utilization of steelmaking slag according to claim 1, wherein in step S1, a mass concentration of the first ammonium chloride solution is 5-30%, and during the leaching, a temperature of a reaction system is controlled to be 5-55°C and pH is controlled to be greater than 9.

3. The method for comprehensive utilization of steelmaking slag according to claim 1, wherein in step S2, a mass concentration of the second ammonium chloride solution is 10-40%, and during the leaching, a temperature of a reaction system is controlled to be 90-125°C and pH is controlled to be less than 2.5.

4. The method for comprehensive utilization of steelmaking slag according to claim 1, wherein in step S2, a molar ratio of ammonium chloride in the second ammonium chloride solution to soluble components in the first leaching residue is (2-6): 1, and the soluble components are calculated by calcium silicate, magnesium silicate, aluminum oxide and iron oxide.

5. The method for comprehensive utilization of steelmaking slag according to claim 1, wherein in step S2, when the first leaching residue is leached using the second ammonium chloride solution, ammonia gas generated by a reaction is discharged from reaction system, and the discharging method comprises any one of inert gas stripping, evaporation and ultrasound.

6. The method for comprehensive utilization of steelmaking slag according to claim 5, wherein in step S2, during the oxidation, air or an oxidant is introduced into the mineralized crude solution;
during the alkali adjustment, ammonia gas collected during the leaching is introduced into the mineralized crude solution that has been oxidized, to adjust pH to 5-6;
during the CO₂ absorption and mineralization, CO₂ gas and ammonia gas collected during the leaching are introduced into the second mineralized solution.

7. The method for comprehensive utilization of steelmaking slag according to claim 1, wherein in step S3, the iron hydroxide precipitate and the aluminum hydroxide precipitate are respectively washed and calcined to obtain an iron oxide product and an aluminum oxide product.

8. The method for comprehensive utilization of steelmaking slag according to claim 1, wherein in steps S1 and S2, the generated ammonium chloride solution returns to the leaching stage respectively to form a closed loop;
in step S3, the generated sodium hydroxide solution returns to the leaching stage to form a closed loop.

9. The method for comprehensive utilization of steelmaking slag according to claim 1, wherein a slurry reactor is employed during the leaching, and the slurry reactor comprises a jacketed reaction kettle (1), a stirring device (2) and an aeration mechanism, wherein the top of the jacketed reaction kettle (1) is provided with an air inlet (3), an air outlet (4) and a feed inlet (5), and the bottom is provided with a discharge port (6) and an outlet port (7), and both the stirring device (2) and the aeration mechanism are arranged inside the jacketed reaction kettle (1);
one or more deflection baffles (8) are arranged at the bottom of the inner side of the jacketed reaction kettle (1).

10. The method for comprehensive utilization of steelmaking slag according to claim 9, wherein the aeration mechanism comprises an aeration coil pipe (9) and an aeration chassis (10),
the aeration coil pipe (9) is spirally arranged on the inner side wall of the jacketed reaction kettle (1), the aeration chassis (10) is fixedly arranged at the bottom of the inner side of the jacketed reaction kettle (1), the aeration chassis (10) is a concentric coil pipe, and the concentric coil pipe is uniformly provided with a plurality of aeration holes.
